# EUROPEAN PATENT APPLICATION

(11) **EP 4 694 046 A1**
(43) Date of publication of application: **11.02.2026**
(21) Application number: 24802954.8
(22) Date of filing: 07.05.2024
(51) Int. Cl.: H04L 25/02

(54) **CHANNEL IMPULSE RESPONSE (CIR) FEEDBACK METHOD AND APPARATUS**

(30) Priority: 11.05.2023 CN 202310538031
(71) Applicant: Huawei Technologies Co., Ltd., Shenzhen, Guangdong 518129 (CN)
(72) Inventor: LIU, Chenchen, Shenzhen, Guangdong 518129 (CN); QIAN, Bin, Shenzhen, Guangdong 518129 (CN); HUANG, Lei, Shenzhen, Guangdong 518129 (CN); YANG, Xun, Shenzhen, Guangdong 518129 (CN)
(74) Representative: Goddar, Heinz J.
(86) International application number: PCT/CN2024/091413
(87) International publication number: WO 2024/230674

(57) **Abstract**

A channel impulse response CIR feedback method and an apparatus are provided. The method includes: A second communication apparatus sends a second signal, and a first communication apparatus receives a first signal obtained through channel transmission on the second signal, and sends a CIR report corresponding to the first signal. The CIR report indicates a quantization result of each first CIR tap in at least one continuous time period, and an amplitude of the first CIR tap is greater than or equal to a first threshold. Based on this solution, the first communication apparatus feeds back, to the second communication apparatus, a quantization result of each CIR tap whose amplitude is greater than or equal to a threshold in the at least one continuous time period. In comparison with a solution in which a quantization result of each CIR tap is fed back, this solution reduces a quantity of CIR taps that are fed back, thereby reducing signaling overheads.

## Description

This application claims priority to Chinese Patent Application No. 202310538031.1, filed with the China National Intellectual Property Administration on May 11, 2023 and entitled "CHANNEL IMPULSE RESPONSE CIR FEEDBACK METHOD AND APPARATUS", which is incorporated herein by reference in its entirety.

### TECHNICAL FIELD

Embodiments of this application relate to the communication field, and in particular, to a channel impulse response CIR feedback method and an apparatus.

### BACKGROUND

An ultra-wideband (ultra-wideband, UWB) technology is a wireless carrier communication technology. The ultra-wideband technology uses a nanosecond-level non-sine wave narrowband pulse for data transmission, and has advantages such as a strong multipath resolution capability, low power consumption, and high confidentiality. As the UWB technology enters a civil field, ultra-wideband wireless communication has become one of popular physical layer technologies in short-range and high-speed wireless networks.

Currently, the Institute of Electrical and Electronics Engineers (institute of electrical and electronics engineers, IEEE) is studying the use of a UWB pulse for sensing. In a sensing application, a sensing initiator sends a UWB signal. When the UWB signal is received by a sensing responder after being transmitted, the sensing responder needs to feed back a channel impulse response (channel impulse response, CIR) to the sensing initiator. In this way, the sensing initiator senses information such as a distance, an angle, and a speed of a target object.

Generally, the sensing responder may quantize each CIR tap (tap) in one or two continuous time periods, and feed back a quantization result of each CIR tap to the sensing initiator. However, overheads of this feedback manner are high.

### SUMMARY

Embodiments of this application provide a channel impulse response CIR feedback method and an apparatus, to reduce CIR feedback overheads.

According to a first aspect, a channel impulse response CIR feedback method is provided. The method may be performed by a first communication apparatus, may be performed by a part of a first communication apparatus, for example, a processor, a chip, a chip system, or the like of the first communication apparatus, or may be implemented by a logic module or software that can implement all or a part of functions of a first communication apparatus. The method includes: receiving a first signal; and sending a CIR report corresponding to the first signal, where the CIR report indicates a quantization result of each first CIR tap in at least one continuous time period, and an amplitude of the first CIR tap is greater than or equal to a first threshold.

Based on this solution, the first communication apparatus feeds back, to the second communication apparatus, a quantization result of each CIR tap whose amplitude is greater than or equal to a threshold in the at least one continuous time period. In comparison with a solution in which a quantization result of each CIR tap is fed back, this solution reduces a quantity of CIR taps that are fed back, thereby reducing signaling overheads. In addition, a quantization result of a CIR tap in a continuous time period may reflect information about a target object within a specific distance. Therefore, the first communication apparatus feeds back the quantization result of the CIR tap in the at least one continuous time period, to help the second communication apparatus sense the target object. In addition, due to sparsity of CIR taps, in an ideal case, amplitude values of only some CIR taps in the continuous time period are not zero. In actual application, due to existence of noise and interference, amplitudes of most CIR taps in the continuous time period may be small, impact of a CIR tap whose amplitude is small on a sensing result may be ignored. Therefore, a quantization result of a CIR tap whose feedback amplitude is greater than or equal to the threshold does not affect the sensing result. In other words, in the solution of this application, sensing performance is not affected while overheads are reduced.

According to a second aspect, a communication method is provided. The method may be performed by a second communication apparatus, may be performed by a part of a second communication apparatus, for example, a processor, a chip, a chip system, or the like of the second communication apparatus, or may be implemented by a logic module or software that can implement all or a part of functions of a second communication apparatus. The method includes: sending a second signal; and receiving a channel impulse response CIR report corresponding to a first signal, where the first signal is a signal obtained through channel transmission on the second signal, the CIR report indicates a quantization result of each first CIR tap in at least one continuous time period, and an amplitude of the first CIR tap is greater than or equal to a first threshold. For technical effects brought by the second aspect, refer to the technical effects brought by the first aspect. Details are not described herein again.

With reference to the first aspect or the second aspect, in a possible design, the CIR report further indicates a quantization result of each second CIR tap in the at least one continuous time period, and an amplitude of the second CIR tap is less than or equal to the first threshold.

With reference to the first aspect or the second aspect, in a possible design, the CIR report includes a first bit. When the first bit is set to a first value, a current CIR tap is the second CIR tap; and when the first bit is set to a second value, the current CIR tap is the first CIR tap, a quantization result of the current CIR tap is indicated by N continuous bits after the first bit, and N is a positive integer.

Based on this possible design, the quantization result of the second CIR tap is indicated by using a small quantity of bits (for example, one bit), so that the second communication apparatus can learn of locations, in the at least one continuous time period, at which amplitudes of CIR taps are greater than or equal to the first threshold while overheads are reduced. This effectively helps the second communication apparatus perform sensing.

With reference to the first aspect or the second aspect, in a possible design, the quantization result of the current CIR tap includes a quantization result of a first feature and a quantization result of a second feature. The quantization result of the first feature is indicated by first K bits in the N bits, the quantization result of the second feature is indicated by last L bits in the N bits, K and L are positive integers, and a sum of K and L is equal to N. The first feature is an I signal of the current CIR tap, and the second feature is a Q signal of the current CIR tap; or the first feature is an amplitude of the current CIR tap, and the second feature is a phase of the current CIR tap.

Based on this possible design, the I signal and the Q signal of the CIR tap can be separately quantized, or the amplitude and the phase of the CIR tap can be separately quantized, thereby improving measurement result quantization precision.

With reference to the first aspect or the second aspect, in a possible design, the CIR report includes a first field and a second field separately correspond to the at least one continuous time period. The first field corresponding to a first continuous time period indicates the first CIR tap in the first continuous time period, the second field corresponding to the first continuous time period indicates a quantization result of the first CIR tap in the first continuous time period, and the first continuous time period is any one of the at least one continuous time period.

Based on this possible design, the second communication apparatus can learn, based on an indication of the first field, of locations at which amplitudes of CIR taps in the continuous time period are greater than or equal to the first threshold, or the second communication apparatus can learn of locations at which quantization results of CIR taps are indicated by the second field. In this way, the second communication apparatus can accurately parse the CIR report, to improve sensing performance when sensing is performed based on the CIR report.

With reference to the first aspect or the second aspect, in a possible design, the first field corresponding to the first continuous time period is a bitmap, the bitmap includes X bits, X is a quantity of CIR taps in the first continuous time period, the X bits are in a one-to-one correspondence with X CIR taps in the first continuous time period, and X is a positive integer. When a second bit is set to a third value, a CIR tap corresponding to the second bit is the first CIR tap; and when the second bit is set to a fourth value, a CIR tap corresponding to the second bit is the second CIR tap, where the second bit is any bit in the bitmap.

Based on this possible design, the bitmap can clearly indicate, in the continuous time period, the locations at which the amplitudes of the CIR taps are greater than or equal to the first threshold, thereby improving indication efficiency.

With reference to the first aspect or the second aspect, in a possible design, the first field corresponding to the first continuous time period is located before the second field corresponding to the first continuous time period.

Based on this possible design, the second communication apparatus can first parse the first field or the following second field to indicate locations of quantization results of CIR taps, so that the second communication apparatus can accurately parse the CIR report.

With reference to the first aspect or the second aspect, in a possible design, a quantization result of a CIR tap includes quantization results of an I signal and a Q signal of the CIR tap; or a quantization result of a CIR tap includes quantization results of an amplitude and a phase of the CIR tap.

Based on this possible design, the I signal and the Q signal of the CIR tap can be separately quantized, or the amplitude and the phase of the CIR tap can be separately quantized, thereby improving measurement result quantization precision.

With reference to the first aspect or the second aspect, in a possible design, the CIR report further indicates the first threshold.

With reference to the first aspect or the second aspect, in a possible design, the at least one continuous time period is at least one continuous time period in a window.

According to a third aspect, a communication apparatus is provided. The communication apparatus includes a unit or a module, and the unit or the module is configured to perform any method according to the first aspect or the sixth aspect.

According to a fourth aspect, a communication apparatus is provided, to implement the foregoing methods. The communication apparatus includes corresponding modules, units, or means (means) for implementing the methods. The modules, units, or means may be implemented by hardware, software, or hardware executing corresponding software. The hardware or the software includes one or more modules or units corresponding to functions.

In some possible designs, the communication apparatus may include a processing module and a transceiver module. The processing module may be configured to implement a processing function in any one of the foregoing aspects and any one of the possible implementations of the foregoing aspects. The transceiver module may include a receiving module and a sending module that are respectively configured to implement a receiving function and a sending function in any one of the foregoing aspects and the possible implementations thereof.

In some possible designs, the transceiver module may include a transceiver circuit, a transceiver machine, a transceiver, or a communication interface.

According to a fifth aspect, a communication apparatus is provided. The communication apparatus includes a processor and a memory. The memory is configured to store computer instructions. When the processor executes the instructions, the communication apparatus is enabled to perform the method according to any one of the aspects.

According to a sixth aspect, a communication apparatus is provided, including a processor and a communication interface, where the communication interface is configured to communicate with a module other than the communication apparatus, and the processor is configured to execute a computer program or instructions, so that the communication apparatus performs the method according to any one of the aspects.

According to a seventh aspect, a communication apparatus is provided, including at least one processor, where the processor is configured to execute a computer program or instructions stored in a memory, so that the communication apparatus performs the method according to any one of the aspects. The memory may be coupled to the processor, or may be independent of the processor.

According to an eighth aspect, a computer-readable storage medium is provided. The computer-readable storage medium stores a computer program or instructions, and when the computer program or the instructions is/are run on a communication apparatus, the communication apparatus is enabled to perform the method according to any one of the aspects.

According to a ninth aspect, a computer program product including instructions is provided. When the computer program product is run on a communication apparatus, the communication apparatus is enabled to perform the method according to any one of the foregoing aspects.

According to a tenth aspect, a communication apparatus (for example, the communication apparatus may be a chip or a chip system) is provided. The communication apparatus includes a processor, configured to implement a function in any aspect.

In some possible designs, the communication apparatus includes the memory, and the memory is configured to store necessary program instructions and data.

In some possible designs, when the apparatus is a chip system, the apparatus may include a chip, or may include a chip and another discrete component.

It may be understood that the communication apparatus according to any one of the third aspect to the tenth aspect may be the first communication apparatus in the first aspect, or an apparatus included in the first communication apparatus, for example, a chip or a chip system. Alternatively, the communication apparatus may be the second communication apparatus in the second aspect, or an apparatus included in the second communication apparatus, for example, a chip or a chip system.

It may be understood that when the communication apparatus provided in any one of the third aspect to the tenth aspect is a chip, a sending action/function of the communication apparatus may be understood as outputting information, and a receiving action/function of the communication apparatus may be understood as inputting information.

For technical effects brought by any design manner in the third aspect to the tenth aspect, refer to technical effects brought by different design manners in the first aspect and the second aspect. Details are not described herein again.

According to an eleventh aspect, a communication system is provided. The communication system includes the first communication apparatus in the first aspect and the second communication apparatus in the second aspect.

### BRIEF DESCRIPTION OF DRAWINGS

FIG. 1 is a diagram of window-based CIR feedback according to this application;
FIG. 2 is a diagram of distribution of CIR tap amplitude values according to this application;
FIG. 3 is a diagram of a structure of a communication system according to this application;
FIG. 4 is a diagram of a structure of a star topology according to this application;
FIG. 5 is a diagram of a structure of a point-to-point topology according to this application;
FIG. 6 is a schematic flowchart of a CIR feedback method according to this application;
FIG. 7 is a diagram of a structure of a CIR report according to this application;
FIG. 8 is a schematic flowchart of parsing a CIR report according to this application;
FIG. 9 is a diagram of a structure of another CIR report according to this application;
FIG. 10 is a diagram of a structure of a communication apparatus according to this application;
FIG. 11 is a diagram of a structure of another communication apparatus according to this application; and
FIG. 12 is a diagram of a structure of still another communication apparatus according to this application.

### DESCRIPTION OF EMBODIMENTS

In the description of this application, unless otherwise specified, the character "/" indicates that associated objects are in an "or" relationship. For example, A/B may represent A or B. The term "and/or" in this application merely describes an association relationship between associated objects and indicates that three relationships may exist. For example, A and/or B may represent three cases: Only A exists, both A and B exist, or only B exists, where A and B may be singular or plural.

In addition, in the descriptions of this application, "a plurality of" means two or more than two unless otherwise specified. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In addition, in embodiments of this application, the word "exemplary" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

It may be understood that an "embodiment" used throughout this specification means that particular features, structures, or characteristics related to this embodiment are included in at least one embodiment of this application. Therefore, embodiments in the entire specification are not necessarily a same embodiment. In addition, these particular features, structures, or characteristics may be combined in one or more embodiments by using any appropriate manner. It may be understood that sequence numbers of the processes do not mean execution sequences in various embodiments of this application. The execution sequences of the processes should be determined based on functions and internal logic of the processes, and should not be construed as any limitation on implementation processes of embodiments of this application.

It may be understood that, in this application, "when" and "if" mean that corresponding processing is performed in an objective situation, are not intended to limit time, do not require a determining action during implementation, and do not mean any other limitation.

It may be understood that in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with other features based on a requirement. Correspondingly, the apparatus provided in embodiments of this application may also correspondingly implement these features or functions. Details are not described herein.

In this application, unless otherwise specified, for same or similar parts in embodiments, refer to each other. In embodiments of this application, unless otherwise stated or there is a logic conflict, terms and/or descriptions between different embodiments are consistent and may be mutually referenced, and technical features in different embodiments may be combined into a new embodiment based on an internal logical relationship thereof. The following implementations of this application are not intended to limit the protection scope of this application.

Currently, many world-renowned large companies, research institutes, and standardization organizations are actively engaged in the research, development, and standardization of ultra-wideband (UWB) wireless communication technologies. For example, the Institute of Electrical and Electronics Engineers (institute of electrical and electronics engineers, IEEE) incorporates the UWB technology into the IEEE 802 series wireless standards, and releases the UWB technology-based high-speed wireless personal area network (wireless personal area network, WPAN) standard IEEE 802.15.4a and an evolved version IEEE 802.15.4z of the IEEE 802.15.4a.

Customization of the next-generation UWB WPAN standard has also been put on the agenda. A UWB signal has a strong anti-multipath interference capability and ultra-high time resolution, and has a unique advantage in high-precision short-range ranging. Therefore, one of key topics of the next-generation standard is to use a UWB pulse for sensing.

In a sensing application, a sensing initiator sends the UWB signal, and the UWB signal is received by a sensing responder after being transmitted. The sensing responder may perform a correlation operation based on the received signal and a local signal to obtain a channel impulse response (channel impulse response, CIR), and feed back the CIR to the sensing initiator.

There may be a third-party object (referred to as a target object) between the sensing initiator and the sensing responder, and the UWB signal may be received by the sensing responder after being reflected by the target object. Therefore, the CIR obtained by the sensing responder based on the received signal includes information such as a distance, an angle, and a speed of the target object. In this way, after the sensing responder feeds back the CIR to the sensing initiator, the sensing initiator may sense the information such as the distance, the angle, and the speed of the target object based on the feedback.

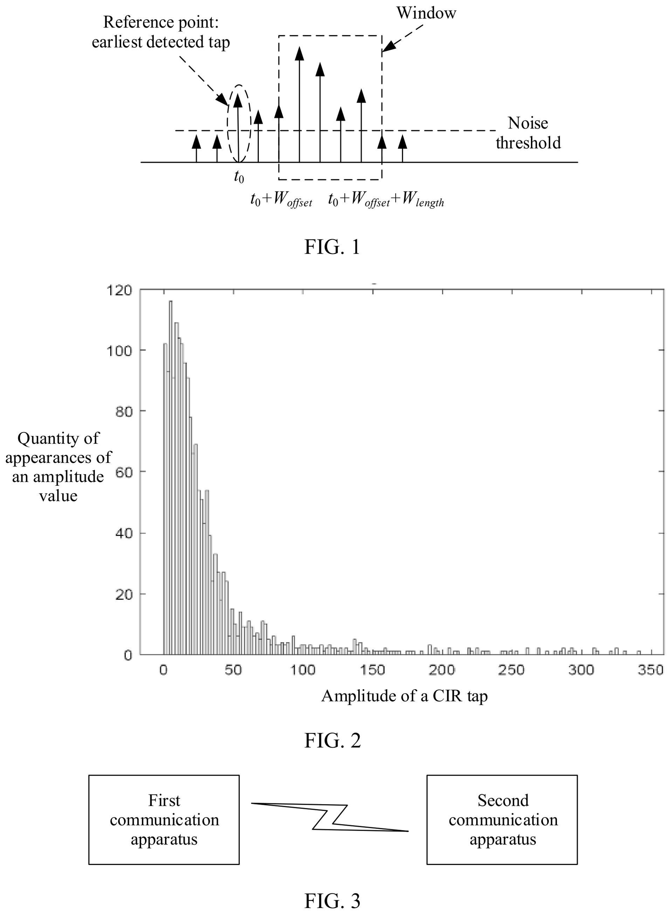

Generally, the sensing responder performs window-based CIR feedback. As shown in FIG. 1, the sensing responder uses an earliest detected tap (tap) as a reference point (denoted as *t*₀), determines a window based on an offset (*W_{offset}*) and a window length (*W_{length}*), and feeds back a CIR measurement result of the tap in the window. For example, the window length may be 32, 64, 128, or 256 taps. The earliest detected tap is a tap corresponding to a first path or a line of sight path.

To reduce a CIR feedback amount, the sensing responder is currently allowed to feed back a CIR measurement result of each tap in one or two continuous time periods in the window. Because the CIR measurement result of the tap may reflect the CIR, the tap in embodiments of this application may also be referred to as a CIR tap, namely, a CIR tap.

For each CIR tap in each continuous time period, the sensing responder may separately quantize a real part and an imaginary part of the CIR measurement result of the CIR tap, and then feed back a quantization result to the sensing initiator. After receiving the feedback, the sensing initiator performs recovery based on the quantization result. For example, the real part and the imaginary part may be separately quantized by using 16 bits, or quantization results of the real part and the imaginary part are separately indicated by 16 bits. In this case, a quantization result of each CIR tap occupies 32 bits. However, overheads of this feedback manner are high.

For example, FIG. 2 shows distribution of amplitude values of CIR taps that include a reflected signal in a continuous time period. A horizontal axis represents an amplitude of the CIR tap or a range of CIR data. A vertical axis represents a quantity of appearances of the amplitude value.

It can be learned from FIG. 2 that most CIR taps have small amplitudes. For example, in FIG. 2, a CIR tap whose amplitude ranges from 0 to 50 may appear more than 100 times at most. However, the CIR taps with the small amplitudes are meaningless to a sensing result, and quantizing the CIR taps in a current manner causes high overheads.

In view of this, this application provides a CIR feedback method. In the method, a sensing responder feeds back, to a sensing initiator, a quantization result of a CIR tap whose amplitude is greater than or equal to a threshold. This reduces a quantity of CIR taps that are fed back, and reduces signaling overheads. In addition, impact of CIR taps with the small amplitudes on the sensing result may be ignored. Therefore, in the solutions of this application, sensing performance is not affected while overheads are reduced.

The technical solutions in the embodiments of this application may be applied to various communication systems, for example, a UWB-based wireless personal area network system, a sensing (sensing) system, a wireless local area network (wireless local area network, WLAN) system, Bluetooth (Bluetooth), ZigBee (ZigBee), a cellular mobile network, a vehicle to everything (vehicle to everything, V2X) system, a device-to-device (device-to-device, D2D) communication system, a machine to machine (machine to machine, M2M) communication system, an Internet of Things (Internet of Things, IoT) system, or another applicable communication system. This is not limited in this application.

For example, the wireless local area network may be a wireless local area network that supports a next-generation Wi-Fi protocol of IEEE 802.11ax. The next-generation Wi-Fi protocol includes but is not limited to 802.11be, Wi-Fi 7, an extremely high throughput (extremely high throughput, EHT) system, and 802.11 series protocols such as a next-generation Wi-Fi protocol of 802.11be, Wi-Fi 8, and Wi-Fi artificial intelligence (artificial intelligence, AI).

The communication systems and the communication scenarios applicable to this application are merely examples for description. The communication systems and the communication scenarios applicable to this application are not limited thereto. This is uniformly described herein. Details are not described below again.

FIG. 3 shows a communication system applicable to the solutions of this application according to this application. The communication system includes a first communication apparatus and a second communication apparatus.

Optionally, the first communication apparatus and the second communication apparatus may work on a UWB frequency band. In a sensing scenario, the first communication apparatus may serve as a sensing responder (responder), and the second communication apparatus may serve as a sensing initiator (initiator).

Optionally, the first communication apparatus and the second communication apparatus may communicate with each other in a wireless manner (or through an air interface). A channel between the first communication apparatus and the second communication apparatus may be a multipath channel.

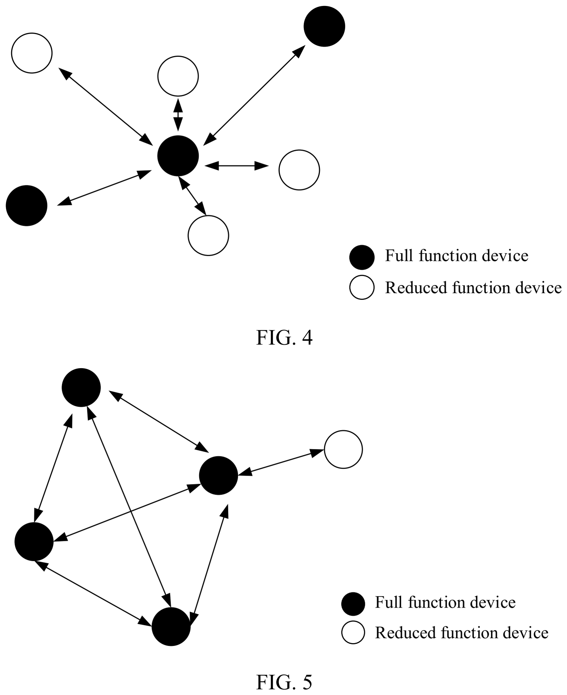

Optionally, as shown in FIG. 4, the first communication apparatus and the second communication apparatus may be located in a star topology. The star topology includes one central control node, and all nodes except the central control node can communicate with the central control node. For example, the second communication apparatus may be the central control node in the topology. Correspondingly, the first communication apparatus is any node other than the central control node in the topology.

Alternatively, as shown in FIG. 5, the first communication apparatus and the second communication apparatus may be located in a point-to-point topology. Nodes in the topology can communicate with each other. The first communication apparatus and the second communication apparatus may be two nodes that can communicate with each other in the topology.

Optionally, as shown in FIG. 4 or FIG. 5, the star topology or the point-to-point topology may include a full function device (full function device) and a reduced function device (reduced function device). The first communication apparatus may be the full function device or the reduced function device. Alternatively, the second communication apparatus may be the full function device or the reduced function device.

Optionally, the reduced function device may be defined relative to the full function device. A capability of the reduced function device (for example, a supported bandwidth, a peak data rate, a quantity of receive antennas, and a modulation order) is lower than a capability of the full function device.

Optionally, product forms of the first communication apparatus and the second communication apparatus include but are not limited to a communication server, a router, a switch, a bridge, a terminal device, and the like.

Optionally, the terminal device may be a device having a wireless transceiver function. The terminal device may also be referred to as user equipment (user equipment, UE), a terminal, an access terminal, a subscriber unit, a subscriber station, a mobile station (mobile station, MS), a remote station, a remote terminal, a mobile terminal (mobile terminal, MT), a user terminal, a wireless communication device, a user agent, a user apparatus, or the like.

For example, the terminal device may be an uncrewed aerial vehicle, an IoT device (for example, a sensor, an electricity meter, or a water meter), a V2X device, a station (station, STA) in a WLAN, a cellular phone, a cordless phone, a session initiation protocol (session initiation protocol, SIP) phone, a wireless local loop (wireless local loop, WLL) station, a personal digital assistant (personal digital assistant, PDA) device, a hand-held device with a wireless communication function, a computing device or another processing device connected to a wireless modem, a vehicle-mounted device, a wearable device (which may also be referred to as a wearable intelligent device), a tablet computer or a computer with wireless receiving and transmitting functions, a virtual reality (virtual reality, VR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal (for example, smart home) in a smart home (smart home), a vehicle-mounted terminal, a vehicle having a vehicle-to-vehicle (vehicle-to-vehicle, V2V) communication capability, an intelligent networked vehicle, an unmanned aerial vehicle having an unmanned aerial vehicle to unmanned aerial vehicle (UAV to UAV, U2U) communication capability, and the like. The terminal may be mobile or fixed. This is not specifically limited in this application.

With reference to the accompanying drawings, the following describes in detail the method provided in embodiments of this application by using interaction between the first communication apparatus and the second communication apparatus as an example.

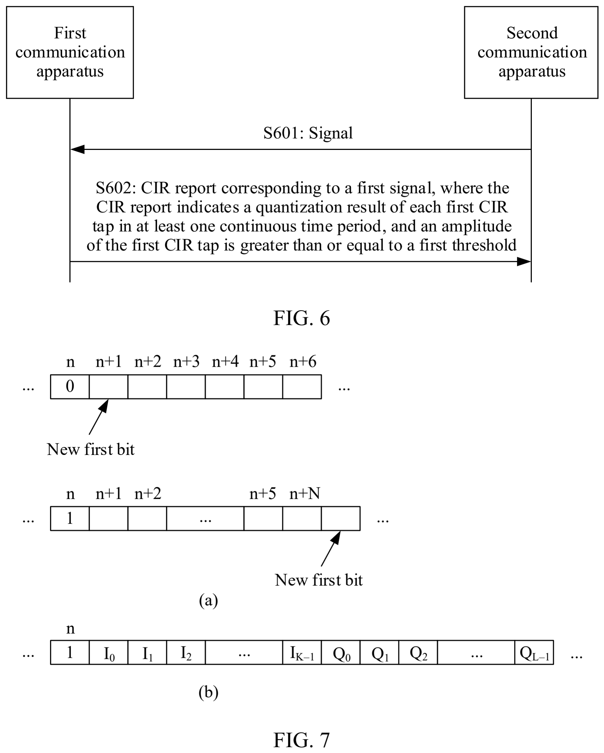

FIG. 6 is a schematic flowchart of a CIR feedback method according to this application. The CIR feedback method includes the following steps.

S601: A second communication apparatus sends a signal. Correspondingly, a first communication apparatus receives the signal.

The second communication apparatus sends a second signal, and the first communication apparatus receives a first signal. The first signal is a signal obtained through channel transmission on the second signal.

Optionally, the second signal may be a UWB signal or a UWB pulse. The second signal may be used for sensing or measurement, and may also be referred to as a sensing signal or a sensing measurement signal. The second signal and the sensing signal or the sensing measurement signal are interchangeable. A name of the second signal is not specifically limited in this application.

Optionally, the first signal may include a direct signal and a reflected signal. For example, the direct signal may be a signal obtained after the second signal is transmitted through a line of sight path between the first communication apparatus and the second communication apparatus, and the reflected signal may be a signal obtained after the second signal is reflected by at least one target object.

S602: The first communication apparatus sends a CIR report corresponding to the first signal to the second communication apparatus. Correspondingly, the second communication apparatus receives, from the first communication apparatus, the CIR report corresponding to the first signal.

Optionally, the first communication apparatus may determine a CIR based on the first signal, and then determine the CIR report based on the CIR. For example, the first communication apparatus may perform a correlation operation based on the first signal and a local sequence to obtain the CIR, and the CIR may be represented by using a plurality of CIR taps.

Optionally, the local sequence may be used to generate the second signal. For example, the second communication apparatus may generate the second signal based on the local sequence, and send the second signal. The local sequence may be negotiated by the first communication apparatus and the second communication apparatus in advance, or the second communication apparatus may notify the first communication apparatus of the local sequence in advance. This is not specifically limited in this application.

The CIR report indicates a quantization result of each first CIR tap in at least one continuous time period. An amplitude of the first CIR tap is greater than or equal to a first threshold.

Optionally, the first threshold may be predefined in a protocol, or may be negotiated by the first communication apparatus and the second communication apparatus, or may be specified by the second communication apparatus for the first communication apparatus, or may be determined by the first communication apparatus. This is not specifically limited in this application.

Optionally, the CIR report may further indicate the first threshold. For example, when the first threshold is determined by the first communication apparatus, the CIR report may indicate the first threshold. Certainly, the first threshold may alternatively be indicated in another case. This is not specifically limited in this application.

Optionally, a quantization result of a CIR tap may be quantization results of an I signal and a Q signal of the CIR tap, or may be quantization results of an amplitude and a phase of the CIR tap.

Optionally, the at least one continuous time period is at least one continuous time period in a window. A reference point of a start location of the window may be a CIR tap earliest detected by the first communication apparatus. The first communication apparatus may determine a start location of the window based on an offset and the earliest detected CIR tap, and determine a location of the window based on a window length. The CIR tap earliest detected by the first communication apparatus may be a CIR tap corresponding to the line of sight path between the first communication apparatus and the second notification apparatus.

Optionally, the offset and the window length may be predefined in a protocol, or may be negotiated by the first communication apparatus and the second communication apparatus, or may be specified by the second communication apparatus for the first communication apparatus, or may be determined by the first communication apparatus. This is not specifically limited in this application.

Optionally, the CIR report may further indicate the offset and the window length. For example, when the offset and the window length are determined by the first communication apparatus, the CIR report may further indicate the offset and the window length. Certainly, the offset and the first threshold may alternatively be indicated in another case. This is not specifically limited in this application.

Optionally, the at least one continuous time period in the window may be determined by using a number of a CIR tap in the window. For example, the window includes L CIR taps. A number of the 1^{st} CIR tap in the window may be 1, a number of the 2^{nd} tap may be 2, and so on. A number of the last CIR tap may be L. In this case, a continuous time period may be represented by numbers of a start CIR tap and an end CIR tap. For example, if the start CIR tap is a CIR tap 1, and the end CIR tap is a CIR tap 32, it indicates that a start location of the continuous time period is a location of the CIR tap 1, and an end location is a location of the CIR tap 32. The CIR taps in the continuous time period include the CIR tap 1 to the CIR tap 32.

Optionally, the at least one continuous time period (that is, a CIR tap based on which feedback is performed) in the window may be predefined in a protocol, or may be negotiated by the first communication apparatus and the second communication apparatus, or may be specified by the second communication apparatus for the first communication apparatus. For example, the second communication apparatus may specify the at least one continuous time period in the window for the first communication apparatus by using a bitmap (bitmap). Alternatively, the at least one continuous time period in the window may be determined by the first communication apparatus. This is not specifically limited in this application.

Optionally, after receiving the CIR report, the second communication apparatus may perform sensing based on the CIR report, for example, determine information such as a distance, an angle, and a speed of the target object. An implementation of performing sensing by the second communication apparatus based on the CIR report is not specifically limited in this application.

Based on this solution, the first communication apparatus feeds back, to the second communication apparatus, a quantization result of each CIR tap whose amplitude is greater than or equal to the threshold in the at least one continuous time period. This reduces a quantity of CIR taps that are fed back, thereby reducing signaling overheads. In addition, a quantization result of a CIR tap in a continuous time period may reflect information about the target object within a specific distance. Therefore, the first communication apparatus feeds back the quantization result of the CIR tap in the at least one continuous time period, to help the second communication apparatus sense the target object. In addition, due to sparsity of CIR taps, in an ideal case, amplitude values of only some CIR taps in the continuous time period are not zero. In actual application, due to existence of noise and interference, amplitudes of most CIR taps in the continuous time period may be small, impact of a CIR tap whose amplitude is small on a sensing result may be ignored. Therefore, a quantization result of a CIR tap whose feedback amplitude is greater than or equal to the threshold does not affect the sensing result. In other words, in the solution of this application, sensing performance is not affected while overheads are reduced.

The foregoing describes an overall procedure of the CIR feedback method provided in this application. The following describes related implementations of the method.

In a first possible implementation, the CIR report may further indicate a quantization result of each second CIR tap in the at least one continuous time period. An amplitude of the second CIR tap is less than or equal to the first threshold. That is, the CIR report may indicate a quantization result of each CIR tap in the at least one continuous time period.

Alternatively, the CIR report may indicate a CIR tap whose amplitude is less than or equal to the first threshold in the at least one continuous time period, in other words, the CIR report may indicate the second CIR tap.

It should be noted that, when an amplitude of a CIR tap is equal to the first threshold, the CIR may be considered as the first CIR, or the CIR may be considered as the second CIR. It is finally considered that whether the CIR is the first CIR or the second CIR may be defined in a protocol, or may be negotiated by the first communication apparatus and the second communication apparatus.

Optionally, a quantization result of a second CIR tap may be indicated by M bits. In other words, the M bits may indicate the second CIR tap. Herein, M is a positive integer less than N, and N is a quantity of bits indicating a quantization result of the first CIR tap. For example, M is equal to 1.

For example, the CIR report may include a field corresponding to each CIR tap in the at least one continuous time period, and the fields corresponding to the CIR taps are arranged in the CIR report in a sequence of the CIR taps in the continuous time period. For example, a field 1 corresponds to the 1^{st} CIR tap in the continuous time period, a field 2 corresponds to the 2^{nd} CIR tap in the continuous time period, the field 2 is located after the field 1, and so on. A field x corresponds to the last CIR tap in the continuous time period. In this case, a location of a CIR tap corresponding to the field in the continuous time period may be determined based on a location of the field.

Optionally, a field corresponding to the second CIR tap may be one bit, that is, M may be equal to 1. The 1^{st} bit in a field corresponding to the first CIR tap may indicate that the field corresponds to the first CIR tap.

Optionally, for example, the CIR report includes a first bit. When the first bit is set to a first value, a current CIR tap is the second CIR tap; and when the first bit is set to a second value, the current CIR tap is the first CIR tap, a quantization result of the current CIR tap is indicated by N continuous bits after the first bit, and N is a positive integer. The 1^{st} bit in the N bits is a next bit after the first bit, or is the 1^{st} bit after the first bit.

The current CIR tap is a CIR tap corresponding to the first bit, or is a CIR tap corresponding to a field to which the first bit belongs.

Optionally, when the first bit is set to a first value, it may be considered that the first bit is a field corresponding to the current CIR tap, and the first bit indicates the quantization result of the current CIR tap, or the first bit indicates that the current CIR tap is the second CIR tap. It may be learned, based on the first bit, that an amplitude of the current CIR tap is less than or equal to the first threshold. When the first bit is set to a second value, it may be considered that the first bit and the N continuous bits after the first bit form the field corresponding to the current CIR tap.

For example, the first value may be 0, and correspondingly, the second value may be 1. Alternatively, the first value may be 1, and correspondingly, the second value may be 0. This is not specifically limited in this application.

For example, as shown in (a) in FIG. 7, the first value is 0 and the second value is 1. It is assumed that a bit n is the first bit. If the bit n is set to 0, a 1^{st} bit (namely, a bit n+1) after the bit n is used as a new first bit, and the current CIR tap is updated to a CIR tap corresponding to the bit n+1. If the bit n is set to 1, N continuous bits after the bit n indicate the quantization result of the current CIR tap (that is, a CIR tap corresponding to the bit n). Then, the 1^{st} bit after the N bits is used as the new first bit, and the current CIR tap is updated to a CIR tap corresponding to the bit.

Optionally, the quantization result of the current CIR tap includes a quantization result of a first feature and a quantization result of a second feature. The quantization result of the first feature is indicated by first K bits in the N bits, the quantization result of the second feature is indicated by last L bits in the N bits, K and L are positive integers, and a sum of K and L is equal to N.

The first feature is an I signal of the current CIR tap, and the second feature is a Q signal of the current CIR tap. The I signal is an in-phase (In-phase) signal, and the Q signal is a quadrature (quadrature) signal. Alternatively, the first feature is an amplitude of the current CIR tap, and the second feature is a phase of the current CIR tap.

Based on the example shown in (a) in FIG. 7, when the bit n is set to 1, for example, the first feature is the I signal, and the second feature is the Q signal, the CIR report may include bits shown in (b) in FIG. 7.

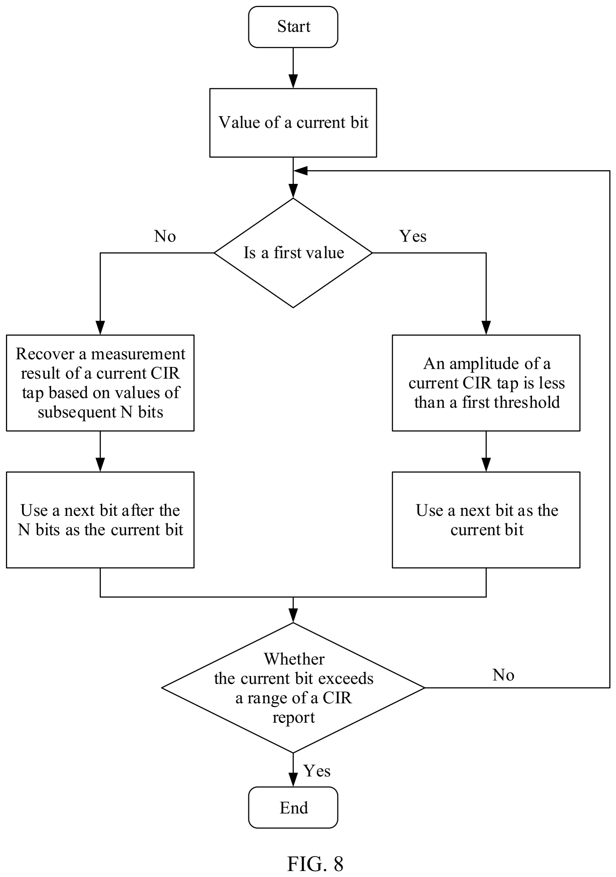

For example, M is equal to 1. Based on the foregoing design, after receiving the CIR report, the second communication apparatus may parse the CIR report according to the procedure shown in FIG. 8. Refer to FIG. 8. The second communication apparatus reads a value of a current bit, determines whether the value of the current bit is the first value, and if the value of the current bit is the first value, determines that the amplitude of the current CIR tap is less than the first threshold, or determines that the current CIR tap is the second CIR tap, and then uses a next bit as the current bit. If the value of the current bit is not the first value, that is, the value of the current bit is the second value, a measurement result of the current CIR tap is recovered based on values of N continuous bits after the current bit, and then a next bit of the N bits is used as the current bit.

Optionally, after determining the current bit, the second communication apparatus may further determine whether the current bit corresponds to a CIR tap. For example, when the second communication apparatus has learned of the quantization result of each CIR tap in the at least one continuous time period by using a bit before the current bit, it indicates that the current bit does not correspond to the CIR tap, and the procedure ends. When the second communication apparatus does not learn of the quantization result of each CIR tap in the at least one continuous time period by using the bit before the current bit, it indicates that the current bit corresponds to the CIR tap, determining on a value of the current bit is returned, and parsing continues.

Alternatively, after determining the current bit, the second communication apparatus may further determine whether the current bit exceeds a range of the CIR report. If the current bit exceeds the range of the CIR report, the procedure ends. If the current bit does not exceed the range of the CIR report, the second communication apparatus continues to perform parsing. For example, the CIR report may be carried in a message, and the message may include a CIR report field used to carry the CIR report. Therefore, that the current bit exceeds the range of the CIR report may be understood as that the current bit does not belong to the CIR report field.

Based on the foregoing first possible implementation, the quantization result of the second CIR tap is indicated by a small quantity of bits (for example, one bit), so that the second communication apparatus can learn of locations, in the at least one continuous time period, at which amplitudes of CIR taps are greater than or equal to the first threshold while overheads are reduced. This effectively helps the second communication apparatus perform sensing.

In a second possible implementation, the CIR report includes a first field and a second field that respectively correspond to the at least one continuous time period. For any one (referred to as a first continuous time period) of the at least one continuous time period, a first field corresponding to the first continuous time period indicates a first CIR tap in the first continuous time period. In other words, the first field corresponding to the first continuous time period may indicate locations of CIR taps that are the first CIR taps in the first continuous time period. A second field corresponding to the first continuous time period indicates the quantization result of the first CIR tap in the first continuous time period.

To be specific, for example, a quantity of the at least one continuous time period is equal to 2, and the two continuous time periods are denoted as a continuous time period 1 and a continuous time period 2. The CIR report may include a first field corresponding to a continuous time period 1 and a second field corresponding to the continuous time period 1, and a first field corresponding to a continuous time period 2 and a second field corresponding to the continuous time period 2.

It may be understood that, in the second possible implementation, the CIR report does not indicate the quantization result of the second CIR tap. The CIR report indicates locations of CIR taps that are the first CIR taps in the continuous time period and quantization results of these first CIR taps.

Optionally, the first field corresponding to the first continuous time period may be a bitmap (bitmap). The bitmap includes X bits, and X is a quantity of CIR taps in the first continuous time period. The X bits are in a one-to-one correspondence with X CIR taps in the first continuous time period, where X is a positive integer.

For any bit (referred to as a second bit) in the bitmap, when the second bit is set to a third value, a CIR tap corresponding to the second bit is the first CIR tap, that is, an amplitude of the CIR tap is greater than or equal to the first threshold. When the second bit is set to a fourth value, a CIR tap corresponding to the second bit is a second CIR tap, that is, an amplitude of the CIR tap is less than or equal to the first threshold.

For example, the third value may be 1, and correspondingly, the fourth value may be 0. Alternatively, the third value may be 0, and correspondingly, the fourth value may be 1. This is not specifically limited in this application.

Optionally, the second field corresponding to the first continuous time period may include N bits. First K bits in the N bits indicate the quantization result of the first feature, and last L bits in the N bits indicate the quantization result of the second feature. For details, refer to related descriptions in the first possible implementation. Details are not described herein again.

Optionally, the first field may also be referred to as a subblock bitmap (SubBlock Bitmap), and the second field may also be referred to as a quantization bit (quantization bit). Certainly, the first field and the second field may alternatively have other names. This is not specifically limited in this application.

Optionally, the first field corresponding to the first continuous time period is located before the second field corresponding to the first continuous time period. The first field corresponding to the first continuous time period and the second field corresponding to the first continuous time period may be adjacent or may not be adjacent in the CIR report.

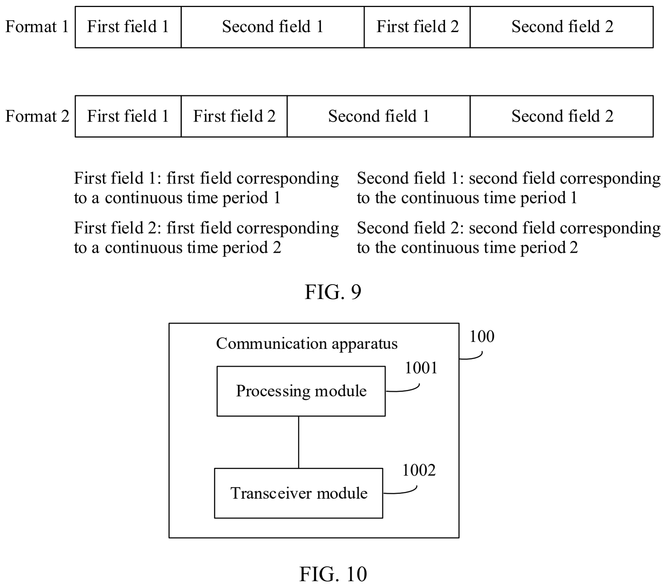

For example, the quantity of the at least one continuous time period is equal to 2, and the two continuous time periods are denoted as the continuous time period 1 and the continuous time period 2. A format of the CIR report may be shown in a format 1 in FIG. 9, or may be shown in a format 2 in FIG. 9. In the format 1, a first field corresponding to a continuous time period is adjacent to a second field corresponding to the continuous time period. In the format 2, first fields respectively corresponding to two continuous time periods are adjacent, and second fields respectively corresponding to the two continuous time periods are adjacent.

Refer to FIG. 9, the first field corresponding to the continuous time period 1 indicates the first CIR tap in the continuous time period 1, or indicates whether an amplitude of each CIR tap in the continuous time period 1 is greater than or equal to the first threshold. The second field corresponding to the continuous time period 1 indicates the quantization result of the first CIR tap in the continuous time period 1. The first field corresponding to the continuous time period 2 indicates the first CIR tap in the continuous time period 2, or indicates whether an amplitude of each CIR tap in the continuous time period 2 is greater than or equal to the first threshold. The second field corresponding to the continuous time period 2 indicates the quantization result of the first CIR tap in the continuous time period 2.

Based on the foregoing second possible implementation, the second communication apparatus can learn, based on an indication of the first field, of locations at which amplitudes of CIR taps in the continuous time period are greater than or equal to the first threshold, or the second communication apparatus can learn of locations at which quantization results of CIR taps are indicated by the second field. In this way, the second communication apparatus can accurately parse the CIR report, to improve sensing performance when sensing is performed based on the CIR report.

It may be understood that, in the foregoing embodiments, the methods and/or steps implemented by the first communication apparatus may also be implemented by a component (for example, a processor, a chip, a chip system, a circuit, a logic module, or software) that can be used in the first communication apparatus. The methods and/or steps implemented by the second communication apparatus may alternatively be implemented by a component (for example, a processor, a chip, a chip system, a circuit, a logic module, or software) that can be used in the second communication apparatus. The chip system may include a chip, or the chip system may include a chip and another discrete device.

It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

FIG. 10 is a diagram of a structure of a communication apparatus 100. The communication apparatus 100 includes a processing module 1001 and a transceiver module 1002. The communication apparatus 100 may be configured to implement a function of the first communication apparatus or the second communication apparatus.

In some embodiments, the communication apparatus 100 may further include a storage module (not shown in FIG. 10), configured to store program instructions and data.

In some embodiments, the transceiver module 1002 may also be referred to as a transceiver unit, and is configured to implement a sending function and/or a receiving function. The transceiver module 1002 may include a transceiver circuit, a transceiver machine, a transceiver, or a communication interface.

In some embodiments, the transceiver module 1002 may include a receiving module and a sending module, respectively configured to perform receiving and sending steps performed by the first communication apparatus or the second communication apparatus in the foregoing method embodiments, and/or configured to support another process of the technology described in this specification. The processing module 1001 may be configured to perform processing-type (for example, determining and parsing) steps performed by the first communication apparatus or the second communication apparatus in the foregoing method embodiments, and/or configured to support another process of the technology described in this specification.

When the communication apparatus 100 is configured to implement a function of the first communication apparatus, in a possible implementation,
the processing module 1001 is configured to receive a first signal by using the transceiver module 1002. The processing module 1001 is further configured to send, through the transceiver module 1002, a CIR report corresponding to the first signal, where the CIR report indicates a quantization result of each first CIR tap in at least one continuous time period, and an amplitude of the first CIR tap is greater than or equal to a first threshold.

When the communication apparatus 100 is configured to implement a function of the second communication apparatus, in another possible implementation,
the processing module 1001 is configured to send a second signal through the transceiver module 1002. The processing module 1001 is further configured to receive, through the transceiver module 1002, a channel impulse response CIR report corresponding to a first signal, where the first signal is a signal obtained by transmitting a second signal through a channel, the CIR report indicates a quantization result of each first CIR tap in at least one continuous time period, and an amplitude of the first CIR tap is greater than or equal to a first threshold.

All related content of the steps in the foregoing method embodiments may be cited in function descriptions of the corresponding functional modules. Details are not described herein again.

Optionally, in this application, that the processing module receives/sends information by using the transceiver module may also be understood as that the processing module controls the transceiver module to receive/send information. Alternatively, that the processing module sends information by using the transceiver module may be understood as that the processing module outputs information to the transceiver module, and the transceiver module sends the information; and that the processing module receives information by using the transceiver module may be understood as that the transceiver module receives information and inputs the information to the processing module.

In this application, the communication apparatus 100 may be presented in a form of functional modules obtained through division in an integrated manner. The "module" herein may be an application-specific integrated circuit (application-specific integrated circuit, ASIC), a circuit, a processor that executes one or more software or firmware programs, a memory, an integrated logic circuit, and/or another component that can provide the foregoing functions.

In some embodiments, when the communication apparatus 100 in FIG. 10 is a chip or a chip system, a function/implementation process of the transceiver module 1002 may be implemented by using an input/output interface (or a communication interface) of the chip or the chip system, and a function/implementation process of the processing module 1001 may be implemented by using a processor (or a processing circuit) of the chip or the chip system.

Because the communication apparatus 100 provided in this embodiment may perform the foregoing methods, for a technical effect that can be achieved by the communication apparatus 100, refer to the foregoing method embodiments. Details are not described herein again.

In a possible product form, the first communication apparatus or the second communication apparatus in embodiments of this application may be further implemented through the following: one or more field programmable gate arrays (field programmable gate arrays, FPGAs), programmable logic devices (programmable logic devices, PLDs), controllers, state machines, gate logic, discrete hardware components, any other suitable circuitry, or any combination of circuits capable of performing various functions described throughout this application.

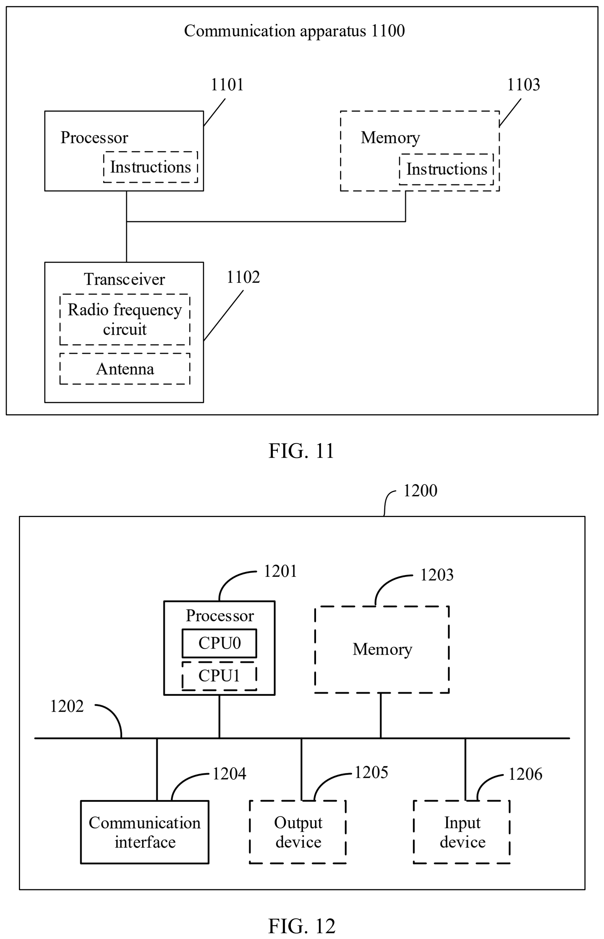

In another possible product form, the first communication apparatus or the second communication apparatus in embodiments of this application may be implemented by using a general bus architecture. For ease of description, FIG. 11 is a schematic diagram of a structure of a communication apparatus 1100 according to an embodiment of this application. The communication apparatus 1100 includes a processor 1101 and a transceiver 1102. The communication apparatus 1100 may be a first communication apparatus, or a chip or a chip system in the first communication apparatus. Alternatively, the communication apparatus 1100 may be a second communication apparatus, or a chip or a module in the second communication apparatus. FIG. 11 shows only main components of the communication apparatus 1100. In addition to a processor 1101 and a transceiver 1102, the communication apparatus may further include a memory 1103 and an input/output apparatus (not shown in the figure).

Optionally, the processor 1101 is mainly configured to process a communication protocol and communication data, control the communication apparatus, execute a software program, and process data of the software program. The memory 1103 is mainly configured to store the software program and data. The transceiver 1102 may include a radio frequency circuit and an antenna. The radio frequency circuit is mainly configured to perform conversion between a baseband signal and a radio frequency signal and process a radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user.

Optionally, the processor 1101, the transceiver 1102, and the memory 1103 may be connected through a communication bus.

After the communication apparatus is powered on, the processor 1101 may read the software program in the memory 1103, interpret and execute instructions of the software program, and process data of the software program. When data needs to be sent wirelessly, the processor 1101 performs baseband processing on the to-be-sent data, and then outputs a baseband signal to a radio frequency circuit. The radio frequency circuit performs radio frequency processing on the baseband signal, and then sends, by using the antenna, a radio frequency signal in an electromagnetic wave form. When data is sent to the communication apparatus, the radio frequency circuit receives a radio frequency signal through the antenna, converts the radio frequency signal into a baseband signal, and outputs the baseband signal to the processor 1101. The processor 1101 converts the baseband signal into data, and processes the data.

In another implementation, the radio frequency circuit and the antenna may be disposed independently of the processor that performs baseband processing. For example, in a distributed scenario, the radio frequency circuit and the antenna may be remotely disposed independently of the communication apparatus.

In some embodiments, in terms of hardware implementation, a person skilled in the art may figure out that the communication apparatus 100 may be in a form of the communication apparatus 1100 shown in FIG. 11.

In an example, a function/implementation process of the processing module 1001 in FIG. 10 may be implemented by the processor 1101 in the communication apparatus 1100 shown in FIG. 11 by invoking the computer-executable instructions stored in the memory 1103. A function/implementation process of the transceiver module 1002 in FIG. 10 may be implemented by using the transceiver 1102 in the communication apparatus 1100 shown in FIG. 11.

In still another possible product form, the first communication apparatus or the second communication apparatus in this application may use a composition structure shown in FIG. 12, or include components shown in FIG. 12. FIG. 12 is a schematic composition diagram of a communication apparatus 1200 according to this application. The communication apparatus 1200 may be a first communication apparatus, or a chip or a system on chip in the first communication apparatus; or may be a second communication apparatus, or a module, a chip, or a system on chip in the second communication apparatus.

As shown in FIG. 12, the communication apparatus 1200 includes at least one processor 1201 and at least one communication interface (FIG. 12 is described merely by using an example in which one communication interface 1204 and one processor 1201 are included). Optionally, the communication apparatus 1200 may further include a communication bus 1202 and a memory 1203.

The processor 1201 may be a general-purpose central processing unit (central processing unit, CPU), a general-purpose processor, a network processor (network processor, NP), a digital signal processor (digital signal processing, DSP), a microprocessor, a microcontroller, a programmable logic device (programmable logic device, PLD), or any combination thereof. The processor 1201 may alternatively be another apparatus having a processing function, for example, a circuit, a component, or a software module. This is not limited.

The communication bus 1202 is configured to connect different components in the communication apparatus 1200, so that the different components can communicate with each other. The communication bus 1202 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used for representation in FIG. 12, but this does not mean that there is only one bus or only one type of bus.

The communication interface 1204 is configured to communicate with another device or a communication network. For example, the communication interface 1204 may be a module, a circuit, a transceiver, or any apparatus that can implement communication. Optionally, the communication interface 1204 may alternatively be an input/output interface located in the processor 1201, and is configured to implement signal input and signal output of the processor.

The memory 1203 may be an apparatus having a storage function, and is configured to store instructions and/or data. The instructions may be a computer program.

For example, the memory 1203 may be a read-only memory (read-only memory, ROM) or another type of static storage device that can store static information and/or instructions, may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another compact disc storage, optical disc storage (including a compressed optical disc, a laser disc, an optical disc, a digital universal optical disc, a Blu-ray optical disc, and the like), a magnetic disk storage medium or another magnetic storage device, or the like. This is not limited.

It should be noted that the memory 1203 may exist independently of the processor 1201, or may be integrated with the processor 1201. The memory 1203 may be located in the communication apparatus 1200, or may be located outside the communication apparatus 1200. This is not limited. The processor 1201 may be configured to execute the instructions stored in the memory 1203, to implement a method provided in the following embodiments of this application.

In an optional implementation, the communication apparatus 1200 may further include an output device 1205 and an input device 1206. The output device 1205 communicates with the processor 1201, and can display information in a plurality of manners. For example, the output device 1205 may be a liquid crystal display (liquid crystal display, LCD), a light emitting diode (light emitting diode, LED) display device, a cathode ray tube (cathode ray tube, CRT) display device, or a projector (projector). The input device 1206 communicates with the processor 1201, and can receive input from a user in a plurality of manners. For example, the input device 1206 may be a mouse, a keyboard, a touchscreen device, or a sensing device.

In some embodiments, in terms of hardware implementation, a person skilled in the art may figure out that the communication apparatus 100 shown in FIG. 10 may be in a form of the communication apparatus 1200 shown in FIG. 12.

In an example, a function/implementation process of the processing module 1001 in FIG. 10 may be implemented by the processor 1201 in the communication apparatus 1200 shown in FIG. 12 by invoking the computer-executable instructions stored in the memory 1203. A function/implementation process of the transceiver module 1002 in FIG. 10 may be implemented by using the communication interface 1204 in the communication apparatus 1200 shown in FIG. 12.

It should be noted that the structure shown in FIG. 12 does not constitute a specific limitation on the first communication apparatus or the second communication apparatus. For example, in some other embodiments of this application, the first communication apparatus or the second communication apparatus may include more or fewer components than those shown in the figure, some components may be combined, some components may be split, or the components may be differently arranged. The components shown in the figure may be implemented by hardware, software, or a combination of software and hardware.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store a necessary computer program and data. The computer program may include instructions. The processor may invoke the instructions in the computer program stored in the memory, to instruct the communication apparatus to perform the method in any foregoing method embodiment. Certainly, the communication apparatus may not include a memory.

In another possible implementation, the communication apparatus further includes an interface circuit. The interface circuit is a code/data read/write interface circuit, and the interface circuit is configured to receive computer-executable instructions (where the computer-executable instructions are stored in a memory, and may be directly read from the memory, or may be read through another component), and transmit the computer-executable instructions to the processor.

In still another possible implementation, the communication apparatus further includes a communication interface, and the communication interface is configured to communicate with a module other than the communication apparatus.

It may be understood that the communication apparatus may be a chip or a chip system. When the communication apparatus is a chip system, the communication apparatus may include a chip, or may include a chip and another discrete component. This is not specifically limited in embodiments of this application.

This application further provides a computer-readable storage medium. The computer-readable storage medium stores computer programs or instructions. When the computer programs or instructions are executed by a computer, functions in any foregoing method embodiment are implemented.

This application further provides a computer program product. When the computer program product is executed by a computer, functions of any one of the foregoing method embodiments are implemented.

A person of ordinary skill in the art may understand that, for the purpose of convenient and brief description, for a detailed working process of the foregoing system, apparatuses, and units, refer to a corresponding process in the foregoing method embodiment. Details are not described herein again.

It may be understood that the system, apparatuses, and methods described in this application may alternatively be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may be physically separated or not, this is, may be located together in the same place or distributed on a plurality of network units. Parts displayed as units may or may not be physical units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, the specification and accompanying drawings are merely example description of this application defined by the accompanying claims, and are considered as any of or all modifications, variations, combinations or equivalents that cover the scope of this application. It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A channel impulse response CIR feedback method, wherein the method comprises:
receiving a first signal; and
sending a CIR report corresponding to the first signal, wherein the CIR report indicates a quantization result of each first CIR tap in at least one continuous time period, and an amplitude of the first CIR tap is greater than or equal to a first threshold.

2. The method according to claim 1, wherein the CIR report further indicates a quantization result of each second CIR tap in the at least one continuous time period, and an amplitude of the second CIR tap is less than or equal to the first threshold.

3. The method according to claim 2, wherein the CIR report comprises a first bit;
when the first bit is set to a first value, a current CIR tap is the second CIR tap; and
when the first bit is set to a second value, the current CIR tap is the first CIR tap, a quantization result of the current CIR tap is indicated by N continuous bits after the first bit, and N is a positive integer.

4. The method according to claim 3, wherein the quantization result of the current CIR tap comprises a quantization result of a first feature and a quantization result of a second feature;
the quantization result of the first feature is indicated by first K bits in the N bits, the quantization result of the second feature is indicated by last L bits in the N bits, K and L are positive integers, and a sum of K and L is equal to N; and
the first feature is an I signal of the current CIR tap, and the second feature is a Q signal of the current CIR tap; or the first feature is an amplitude of the current CIR tap, and the second feature is a phase of the current CIR tap.

5. The method according to claim 1, wherein the CIR report comprises a first field and a second field that respectively correspond to the at least one continuous time period; and
the first field corresponding to a first continuous time period indicates the first CIR tap in the first continuous time period, the second field corresponding to the first continuous time period indicates a quantization result of the first CIR tap in the first continuous time period, and the first continuous time period is any one of the at least one continuous time period.

6. The method according to claim 5, wherein the first field corresponding to the first continuous time period is a bitmap, the bitmap comprises X bits, X is a quantity of CIR taps in the first continuous time period, the X bits are in a one-to-one correspondence with X CIR taps in the first continuous time period, and X is a positive integer; and
when a second bit is set to a third value, a CIR tap corresponding to the second bit is the first CIR tap; and when the second bit is set to a fourth value, a CIR tap corresponding to the second bit is the second CIR tap, wherein the second bit is any bit in the bitmap.

7. The method according to claim 5 or 6, wherein the first field corresponding to the first continuous time period is located before the second field corresponding to the first continuous time period.

8. The method according to any one of claims 1 to 7, wherein a quantization result of a CIR tap comprises quantization results of an I signal and a Q signal of the CIR tap; or
a quantization result of a CIR tap comprises quantization results of an amplitude and a phase of the CIR tap.

9. The method according to any one of claims 1 to 8, wherein the CIR report further indicates the first threshold.

10. The method according to any one of claims 1 to 9, wherein the at least one continuous time period is at least one continuous time period in a window.

11. A communication method, wherein the method comprises:
sending a second signal; and
receiving a channel impulse response CIR report corresponding to a first signal, wherein the first signal is a signal obtained through channel transmission on the second signal, the CIR report indicates a quantization result of each first CIR tap in at least one continuous time period, and an amplitude of the first CIR tap is greater than or equal to a first threshold.

12. The method according to claim 11, wherein the CIR report further indicates a quantization result of each second CIR tap in the at least one continuous time period, and an amplitude of the second CIR tap is less than or equal to the first threshold.

13. The method according to claim 12, wherein the CIR report comprises a first bit;
when the first bit is set to a first value, a current CIR tap is the second CIR tap; and
when the first bit is set to a second value, the current CIR tap is the first CIR tap, a quantization result of the current CIR tap is indicated by N continuous bits after the first bit, and N is a positive integer.

14. The method according to claim 13, wherein the quantization result of the current CIR tap comprises a quantization result of a first feature and a quantization result of a second feature;
the quantization result of the first feature is indicated by first K bits in the N bits, the quantization result of the second feature is indicated by last L bits in the N bits, K and L are positive integers, and a sum of K and L is equal to N; and
the first feature is an I signal of the current CIR tap, and the second feature is a Q signal of the current CIR tap; or the first feature is an amplitude of the current CIR tap, and the second feature is a phase of the current CIR tap.

15. The method according to claim 11, wherein the CIR report comprises a first field and a second field that respectively correspond to the at least one continuous time period; and
the first field corresponding to a first continuous time period indicates the first CIR tap in the first continuous time period, the second field corresponding to the first continuous time period indicates a quantization result of the first CIR tap in the first continuous time period, and the first continuous time period is any one of the at least one continuous time period.

16. The method according to claim 15, wherein the first field corresponding to the first continuous time period is a bitmap, the bitmap comprises X bits, X is a quantity of CIR taps in the first continuous time period, the X bits are in a one-to-one correspondence with X CIR taps in the first continuous time period, and X is a positive integer; and
when a second bit is set to a third value, a CIR tap corresponding to the second bit is the first CIR tap; and when the second bit is set to a fourth value, a CIR tap corresponding to the second bit is the second CIR tap, where the second bit is any bit in the bitmap.

17. The method according to claim 15 or 16, wherein the first field corresponding to the first continuous time period is located before the second field corresponding to the first continuous time period.

18. The method according to any one of claims 11 to 17, wherein a quantization result of a CIR tap comprises quantization results of an I signal and a Q signal of the CIR tap; or
a quantization result of a CIR tap comprises quantization results of an amplitude and a phase of the CIR tap.

19. The method according to any one of claims 11 to 18, wherein the CIR report further indicates the first threshold.

20. The method according to any one of claims 11 to 19, wherein the at least one continuous time period is at least one continuous time period in a window.

21. A communication apparatus, wherein the communication apparatus comprises a module configured to perform the method according to any one of claims 1 to 20.

22. A communication apparatus, wherein the communication apparatus comprises a processor, and the processor is configured to run a computer program or instructions, or is configured to enable, through a logic circuit, the communication apparatus to perform the method according to any one of claims 1 to 20.

23. A computer-readable storage medium, wherein the computer-readable storage medium stores computer instructions or a program, and when the computer instructions or the program is run on a communication apparatus, the method according to any one of claims 1 to 20 is performed.

24. A computer program product, wherein the computer program product comprises computer instructions, and when a part or all of the computer instructions are run, the method according to any one of claims 1 to 20 is performed.

25. A communication system, wherein the communication system comprises a first communication apparatus and a second communication apparatus, the first communication apparatus is configured to perform the method according to any one of claims 1 to 10, and the second communication apparatus is configured to perform the method according to any one of claims 11 to 20.
